# NOUVEAU FASCICULE DE BREVET EUROPEEN

(11) **EP 0 329 493 B2**
(45) Date de publication et mention de la décision concernant l'opposition: **17.12.1997**
(45) Mention de la délivrance du brevet: 08.12.1993
(21) Numéro de dépôt: 89400044.7
(22) Date de dépôt: 06.01.1989
(51) Int. Cl.: C09J 7/04, A41D 27/06

(54) **Produit textile thermocollant comprenant un agent de réticulation bloqué chimiquement**
Heisssiegelbares textiles Gebilde, enthaltend ein chemisch blockiertes Vernetzungsmittel
Thermally adhering textile item comprising a chemically blocked crosslinking agent

(30) Priorité: 08.01.1988 FR 8800142
(43) Date de publication de la demande: 23.08.1989
(73) Titulaire: LAINIERE DE PICARDIE: Société anonyme, 80200 Peronne (FR)
(72) Inventeur: Groshens, Pierre, F-80200 Péronne (FR); Paire, Christian, F-80240 Roisel (FR)
(74) Mandataire: Derambure, Christian

(56) Documents cités:
- DE-A- 1 956 605
- FR-A- 2 348 955
- US-A- 4 194 618

## Description

L'invention concerne des produits thermocollants utilisables dans l'industrie textile. Ils comportent un support textile enduit de polymères thermocollants.

Les tissus de renfort destinés à être contre-coller sur une draperie de façon à améliorer sa tenue, ou renforcer sa nervosité font partie de cette catégorie.

Les supports textiles des produits thermocollants peuvent être de différentes natures, tissés, tricotés ou non tissés. Les propriétés recherchées pour les tissus de renfort ressortent des différentes phases de leur fabrication puis de leur utilisation.
. Le support textile une fois fabriqué est d'abord enduit avec la substance thermocollante. Actuellement, cette enduction est le plus souvent une enduction par point réalisée à l'aide d'un cylindre de gravure. Les polymères thermocollants initialement sous forme de poudre ou de pâte sont portés à une température de l'ordre de 80° qui leur permet d'entrer en fusion et d'adhérer au support. Selon une autre technique, l'enduction est réalisée par transfert. C'est-à-dire, que le polymère thermocollant est déposé sous forme de points par un cylindre de gravure sur un tapis traité pour être non adhésif ; ces points sont alors transférés à une température plus faible sur le support textile.
. Le produit textile thermocollant obtenu dans la première étape est ensuite stocké à température ambiante. Il est alors nécessaire que les différentes couches de ce produit en contact n'adhèrent pas les unes avec les autres. C-est-à-dire que le produit textile thermocollant ne doit pas présenter de "tack". Il faut donc que, revenu au voisinage de la température ambiante, le produit textile utilisé ne soit pas collant.
. Le produit textile thermocollant est ensuite utilisé par les confectionneurs qui l'applique contre les draperies et réalisent le collage du tissu de renfort sur la draperie à l'aide de presse fonctionnant à des températures comprises entre 120 et 180° sous des pressions de quelques décibars et quelques bars pendant des temps relativement courts de l'ordre de 10 à 30 secondes. Au cours de cette phase, les polymères du produit textile thermocollant doivent retrouver leur propriété d'adhésion. Toutefois, ils ne doivent pas avoir une trop faible viscosité lors de cette opération car sinon les polymères traverseront le support textile ou la draperie elle-même causant les retours ou traversées qui rendent les produits obtenus quasiment inutilisables.
. Enfin, les vêtements terminés et donc en particulier les draperies munies de tissu de renfort doivent supportés les différents modes d'utilisation et en particulier de lavage. Le collage réalisé à l'étape précédente doit donc résister à des ambiances très difficiles.

De nombreuses tentatives ont été faites pour réaliser des produits bien adaptés aux différente contraintes résultant de l'ensemble des phases mentionnées plus haut.

Ainsi, il a été proposé par exemple de réaliser un adhésif constitué de deux ou plusieurs couches de polymères de caractéristique physique différente. En choisissant convenablement la viscosité et la température de fusion de ces différentes couches, on peut ainsi espérant limiter les traversées ou les retours. Toutefois, la mise en oeuvre de cette technique se révèle très délicate.

Le procédé de dépôt de la matière thermocollante sur le substrat textile dit par transfert mentionné plus haut permet d'éviter la pénétration excessive de la matière collante dans le substrat textile.

On a également proposé de déposer sur le substrat textile un polymère thermocollant et de le rendre thermodurcissable par l'action d'un agent de réticulation ultérieurement mis à son contact.

Selon le document DE-A-1 956 605, il est proposé la réalisation d'une triplure thermosoudable comportant une structure textile recouverte sur l'une de ses faces d'une matière de polymères ou de mélange de polymères essentiellement non réticulés, au moment de l'application, d'un point de ramollissement situé entre 50°C et 200°C dont une partie, au moins 10% en poids, est transformée en moins de cinq minutes à une température comprise entre 120°C et 200°C en une matière plastique insoluble réticulée... Selon cette technique, différentes conditions complémentaires doivent être respectées concernant l'épaisseur de la couche de polymères et sa forme d'application ; le document FR-A-2 348 955 concerne un procédé d'enduction d'un substrat avec un mélange d'une résine époxy et d'un durcisseur. Le produit ainsi obtenu est un textile enduit dont les propriétés sont stables et ne sont pas susceptibles d'être ultérieurement modifiées par une quelconque action physique ou chimique. Ces produits ne sont pas thermocollants.

Le but de la présente invention est donc la réalisation d'un produit textile thermocollant, utilisable notamment comme tissu de renfort, qui puisse être contrecollé sans retours ni traversées, et soit résistant à l'usage, particulièrement aux agents de nettoyage des vêtements.

Le produit thermocollant de l'invention est du type comprenant un support textile et une couche adhésive comportant un polymère thermoadhésif et un agent de réticulation. Il est caractérisé en ce que la couche adhésive comprend un polyamide comme polymère thermoplastique thermocollant, l'agent de réticulation étant bloqué chimiquement de manière à rester inactif chimiquement en-dessous d'une certaine température vis-à-vis des groupements fonctionnels libres du polymère, l'agent de réticulation étant activable à une température comprise entre 80 et 130°C.

L'invention sera mieux comprise à la lecture de la description qui va suivre et des exemples de réalisation qui seront donnés.

L'invention repose sur l'exploitation des propriétés de certains polymères et sur la détermination d'une composition de polymères thermoadhésifs thermodurcissables ayant des propriétés remarquables, en tant que couches adhésives d'un produit thermocollant.

On connaît de nombreux polymères thermoplastiques et thermoadhésifs. Lorsque ces polymères sont portés à une température croissante ils passent de l'état solide à l'état liquide. A condition de ne pas dépasser une température trop élevée, cette variation de la viscosité est sensiblement réversible. De la même manière, portés à une certaine température, ils deviennent adhésifs et perdent cette qualité lorsque leur température baisse.

Par réticulation, un polymère thermoplastique thermocollant peut devenir thermodurcissable c'est-à-dire qu'après la réticulation il n'est plus susceptible de passer de l'état solide à l'état liquide par élévation de sa température.

D'une manière surprenante, il a été montré selon l'invention qu'il était possible d'utiliser afin de réaliser un produit thermocollant, une couche adhésive comportant un polymère thermoadhésif et un agent de réticulation qui est activé lorsqu'il est porté à une température supérieure à une température donnée.

Ainsi, en dessous de cette température, la couche adhésive peut subir un certain nombre de transformations permettant par exemple son accrochage sur un tissu de support, alors que la transformation par réticulation est obtenue par dépassement de cette température. L'adhésion définitive est alors réalisée.

Lors de cette transformation, deux phénomènes ont lieu simultanément, d'une part la fluidification de l'adhésif en tant que thermoplastique et d'autre part sa réticulation et donc sa transformation en thermodurcissable.

Ces deux phénomènes ont des effets opposés sur la viscosité de la couche adhésive. Partant de la température ambiante ordinaire, la transformation du thermoplastique est d'abord dominante tendant à diminuer la viscosité de la couche, ensuite après dépassement de la température d'activation de l'agent de réticulation la réticulation devient dominante et augmente la viscosité de la couche adhésive.

Selon l'invention, une couche adhésive homogène unique cumule l'ensemble de ces propriétés. Il a été montré que par un choix convenable de la nature et des proportions des différents constituants de cette couche, il est possible d'obtenir une couche qui lors de sa montée en température avant transformation passe par un état suffisamment liquide pour assurer une bonne adhésion du produit thermocollant par exemple sur une draperie tout en conservant une viscosité suffisante pour ne pas risquer de traverser cette draperie ou son support lui-même.

La maîtrise de ces propriétés est facilitée par l'introduction dans la couche adhésive d'un catalyseur dont la concentration permet de maîtriser la vitesse de la réaction de réticulation. L'agent réticulant est donc bloqué chimiquement c'est-à-dire qu'il reste inactif chimiquement en dessous d'une certaine température vis-à-vis des groupements fonctionnels libres de la chaîne polymérique du polymère thermoadhésif. On peut utiliser plusieurs modes de bloquage de cet agent réticulant.

L'agent de réticulation peut être bloqué par un agent de bloquage. Par exemple des isocyanates sont bloqués par des caprolactames, des oximes, des phénols, des imidazolines. La température de débloquage est alors spécifique du couple agent réticulant-agent de bloquage.

L'agent réticulant peut être bloqué par une réaction préliminaire sur lui-même sous forme de dimère ou de trimère. L'élévation de la température produira alors la dissociation des cycles en agent réticulant unitaire. Les urétodiones d'isocyanate ou des polyurétonimines entrent dans cette catégorie.

On peut également utiliser des agents réticulants qui comportent un ou plusieurs cycles capables de s'ouvrir sous l'effet de la température. C'est le cas par exemple des oxazolines ou des imidazolines.

On peut encore utiliser des agents réticulants comprenant un ou des groupements fonctionnels dont la structure fonctionnelle sera modifiée par l'effet de la température. Dans certains cas la présence d'un catalyseur sera alors nécessaire. Les acyl azides entrent dans cette catégorie. Par un réarrangement par la réaction dite réaction de Curtius il se forme un carbonyl azide qui se transforme aussitôt en isocyanate libre réactif ou en nitrène réactif.

De nombreux supports textiles peuvent être utilisés pour recevoir une couche adhésive selon l'invention. Dans le cas du produit thermocollant destiné à la réalisation de tissu de renfort ou de triplure pour l'industrie textile ces supports peuvent être tricotés, tissés ou réalisés en non tissés.

L'enduction du support textile par la couche adhésive peut être réalisée par les méthodes traditionnelles par exemple à l'aide d'un cylindre de gravure. La couche adhésive est maintenant le plus souvent constituée d'un réseau de points tramés.

L'enduction peut également être réalisée par transfert c'est-à-dire que la couche adhésive est d'abord déposée par un cylindre de gravure sur un tapis traité pour être non adhésif. Elle est alors portée à une température moindre pour être déposée à partir de la bande de transfert sur le support textile lui-même.

Selon un mode de réalisation préféré d'un produit thermocollant constituant un tissu de triplure, la couche adhésive comprend :
. 59,5 parties d'une solution de 1,4 % de polyacrylate d'ammonium,
. 4 parties d'acide stéarique,
. 30 parties de polyamide dans le point de fusion est à 90° C,
. 6 parties de polyurétonine dont la température de débloquage est de 110° C,
. 0,5 partie d'accélérateur tel que celui commercialisé par la société BAYER sous la marque "DESMORAPIDE".

Après enduction par un procédé de sérigraphie la séchage est réalisé dans un four dont la température est régulée à 90° C. Le poids surfacique de l'enduction est alors d'environ de 13g par m².

Après séchage, cette enduction est stable. Le contre collage c'est-à-dire le collage du produit thermocollant sur la draperie, est réalisé chez le confectionneur sur une presse thermocollante à des températures de l'ordre de 130 à 150° C.

## Revendications

1. Entoilage textile thermocollant comprenant un support textile et une couche adhésive constituée de points, déposée à sa surface, la couche adhésive comportant un polymère thermoplastique thermocollant et un agent de réticulation, caractérisé en ce que la couche adhésive comprend un polyamide comme polymère thermoplastique thermocollant, l'agent de réticulation étant bloqué chimiquement de manière à rester inactif chimiquement en dessous d'une certaine température vis à vis des groupements fonctionnels libres du polymère, l'agent de réticulation étant activable à une température comprise entre 80 et 130°C.

2. Entoilage textile thermocollant selon la revendication 1, caractérisé en ce que la vitesse de la réaction de réticulation - est déterminée de façon que lorsqu'il est soumis à une température comprise entre 110 et 150°C, la couche adhésive passe pendant une courte durée par un état dans lequel elle est adhésive puis durcit par réticulation.

3. Entoilage textile thermocollant selon la revendication 1, caractérisé en ce que l'agent réticulant est composé d'isocyanates.

4. Entoilage textile thermocollant selon la revendication 3, caractérisé en ce que l'agent bloquant est composé de caprolactames.

5. Entoilage textile thermocollant selon la revendication 3, caractérisé en ce que l'agent bloquant est composé d'oximes.

6. Entoilage textile thermocollant selon la revendication 4, caractérisé en ce que l'agent réticulant appartient à la famille des urétodiones d'isocyanate.

7. Entoilage textile thermocollant selon la revendication 1, caractérisé en ce que l'agent réticulant appartient à la famille de l'oxazoline.

8. Entoilage textile thermocollant selon la revendication 1, caractérisé en ce que l'agent réticulant est un acyl azide.

## Patentansprüche

1. Heißklebende Textileinlage umfassend eine Textilunterlage und eine klebende Schicht, die von auf ihrer Oberfläche abgesetzten Punkten gebildet ist, wobei die klebende Schicht ein heißklebendes, thermoplastiches Polymer und und Vernetzungsmittel umfaßt, **dadurch gekennzeichnet**, daß die klebende Schicht als heißklebendes Polymer ein Polyamid enthalt, wobei das Vernetzungsmittel chemisch derart blockiert wird daß es chemisch unterhalb einer gewissen Temperatur gegenüber den freien, funktionellen Gruppen des Polymers inaktiv bleibt und wobei das Vernetzungsmittel bei einer Temperatur zwischen 80° C und 130° C aktivierbar ist.

2. Heißklebende Textileinlage gemaß Anspruch 1, **dadurch gekennzeichnet**, daß die Reaktionsgeschwindigkeit der Vernetzung derart bestimmt wird, daß, wenn sie einer Temperatur zwischen 110° C und 150° C ausgesetzt wird, die klebende Schicht während einer kurzen Dauer durch einen Zustand hindurchgeht, in dem sie klebend ist, und dann durch Vernetzung härtet.

3. Heißklebende Textileinlage gemäß Anspruch 1, **dadurch gekennzeichnet**, daß das Vernetzungsmittel von Isocyanaten gebildet ist.

4. Heißklebende Textileinlage gemäß Anspruch 3, **dadurch gekennzeichnet,** daß das Blockierungsmittel von Caprolactamen gebildet ist.

5. Heißklebende Textileinlage gemäß Anspruch 3, **dadurch gekennzeichnet,** daß das Blockierunsgsmittel von Oximen gebildet ist.

6. Heißklebende Textileinlage gemäß Anspruch 4, **dadurch gekennzeichnet**, daß das Vernetzungsmittel zu der Gruppe der Uretodione von Isocyanat gehört.

7. Heißklebende Textileinlage gemäß Anspruch 1, **dadurch gekennzeichnet**, daß das Vernetzungsmittel zu der Gruppe der Oxazoline gehört.

8. Heißklebende Textileinlage gemäß Anspruch 1, **dadurch gekennzeichnet,** daß das Vernetzungsmittel ein Acylazid ist.

## Claims

1. Thermally adhering textile item comprising a textile support element and an adhesive layer consisting of spots deposited on the surface of this, the adhesive layer comprising a thermally adhering thermoplastic polymer and a crosslinking agent, characterised in that the adhesive layer comprises a polyamide as a thermally adhesive polymer, the crosslinking agent being chemically blocked so as to remain chemically inactive when below a certain temperature in relation to the free functional groupings of the polymer and the crosslinking agent being activated at a temperature of between 80 and 130° C.

2. Thermally adhering textile item as per Claim 1, characterised by the speed of the crosslinking reaction, which is determined so that when it is submitted to a temperature of between 110 and 150° C, the adhesive layer briefly enters its adhesive state, and then subsequently hardens by crosslinking.

3. Thermally adhering textile item as per Claim 1 characterised by the crosslinking agent which is composed of isocyanates.

4. Thermally adhering textile item as per Claim 3, characterised by the blocking agent which is composed of caprolactams.

5. Thermally adhering textile item as per Claim 3, characterised by the blocking agent which is composed of oximes.

6. Thermally adhering textile item as per Claim 4, characterised by the crosslinking agent which belongs to the family of isocyanate uretodions.

7. Thermally adhering textile item as per Claim 1, characterized by the crosslinking agent which belongs to the oxazoline family.

8. Thermally adhering textile item as per claim 1, characterized by the crosslinking agent which is an acyl azide.
